# EUROPEAN PATENT APPLICATION

(11) **EP 4 778 787 A1**
(43) Date of publication of application: **22.07.2026**
(21) Application number: 24865302.4
(22) Date of filing: 02.09.2024
(51) Int. Cl.: B60Q 1/14, B60Q 1/04, F21V 7/00, F21Y 105/10, F21Y 115/10, F21Y 115/15, F21Y 115/30

(54) **LIGHT DISTRIBUTION CONTROL DEVICE, VEHICLE LAMP SYSTEM, AND COMPUTER PROGRAM**

(30) Priority: 12.09.2023 JP 2023147478
(71) Applicant: Koito Manufacturing Co., Ltd., Shinagawa-ku, Tokyo 141-0001 (JP)
(72) Inventor: SUMITANI, Hiroki, Shizuoka-shi Shizuoka 424-8764 (JP); KATAOKA, Takuya, Shizuoka-shi Shizuoka 424-8764 (JP)
(74) Representative: Algemeen Octrooi- en Merkenbureau B.V.
(86) International application number: PCT/JP2024/031466
(87) International publication number: WO 2025/057800

(57) **Abstract**

This light distribution control device uses an image based on an imaging device for imaging an area in front of a vehicle to control the formation of a light distribution pattern by a light distribution variable lamp. When illuminance is to be changed in a first illuminance region (IR1) that is less than or equal to a prescribed first illuminance threshold value (Th1), the light distribution control device changes the illuminance by a first change amount (C1) that is smaller than a change amount by which the illuminance is to be changed in an illuminance region that is greater than the first illuminance threshold value (Th1).

## Description

### TECHNICAL FIELD

The present invention relates to a light distribution control apparatus, a vehicle lamp system, and a computer program.

Recently, ADB (adaptive driving beam) control for controlling a light distribution pattern dynamically and adaptively based on the condition around a vehicle is proposed (see, for example, Patent literature 1). ADB control is configured to use a camera to detect whether an object subject to light shielding which is located in front of the driver's vehicle and for which high-brightness light irradiation should be avoided is found and to shield an area corresponding to the object subject to light shielding from light. An object subject to light shielding is exemplified by a vehicle in front such as a leading vehicle and an oncoming vehicle. The vehicle in front can be detected by a light spot corresponding to the lamp being reflected in an image. By shielding an area corresponding to the vehicle in front, it is possible to reduce the glare experienced by the driver of the vehicle in front.

### RELATED-ART LITERATURE

### PATENT LITERATURE

PATENT LITERATURE 1: JP 2016-088224

### SUMMARY OF INVENTION

### TECHNICAL PROBLEM

Examples of objects, other than a vehicle in front, for which high-brightness light irradiation should be avoided include a light-reflecting object such as a road sign, a delineator, and a signboard. Recently, brightness of vehicle lamps has increased, and intensity of light reflected by a light-reflecting object has an increasing tendency. This has increased the likelihood that high-brightness light is reflected from a light-reflecting object to cause the driver of the driver's vehicle to experience glare.

A light-reflecting object does not emit light on its own. By forming a shielded-light portion in a light-reflecting object, therefore, the light spot corresponding to the light-reflecting object will disappear from the image. When the next light distribution pattern is formed in this case, the light-reflecting object will be irradiated with the light. This causes the light spot originating from the light-reflecting object to reappear in the image. Such repetition of disappearance and appearance of a light spot can be viewed as a flicker by the driver of the driver's vehicle.

One conceivable method to suppress a flicker is to gradually change the amount of light irradiation when switching between light shielding and light irradiation and extend the cycle of repetition of disappearance and appearance of a light spot. If this method is implemented, however, formation of a shielded-light portion for a traffic participant such as a vehicle in front or a pedestrian will be delayed in the case that the light spot originates from the traffic participant. In other words, the likelihood of exposing a traffic participant to glare is increased if it is attempted to improve the viewability for the driver of the driver's vehicle by suppressing a flicker.

The present invention addresses the issue, and a purpose thereof is to provide a technology that makes it easier to improve the viewability for the driver of the driver's vehicle and to reduce glare experienced by traffic participants at the same time.

### SOLUTION TO PROBLEM

An embodiment of the present invention relates to a light distribution control apparatus adapted to control formation of a light distribution pattern by a variable light distribution lamp by using an image based on an imaging apparatus that images an area in front of a vehicle. When changing an illuminance in a first illuminance region equal to or below a predetermined first illuminance threshold value, the light distribution control apparatus changes the illuminance by a first amount of change smaller than an amount of change for changing the illuminance in an illuminance region above the first illuminance threshold value.

Another embodiment of the present invention relates to a vehicle lamp system. The vehicle lamp system includes: an imaging apparatus that images an area in front of a vehicle; a variable light distribution lamp adapted to radiate a variable intensity distribution visible light beam to an area in front of the vehicle; and the light distribution control apparatus according to the above embodiment.

Another embodiment of the present invention relates to a computer program executed by a light distribution control apparatus adapted to control formation of a light distribution pattern by a variable light distribution lamp by using an image based on an imaging apparatus that images an area in front of a vehicle. The computer program causes the light distribution control apparatus to execute a function of changing, when changing an illuminance in a first illuminance region equal to or below a predetermined first illuminance threshold value, the illuminance by a first amount of change smaller than an amount of change for changing the illuminance in an illuminance region above the first illuminance threshold value.

Optional combinations of the aforementioned constituting elements, and implementations of the present invention in the form of methods, apparatuses, and systems may also be practiced as additional modes of the present invention.

### ADVANTAGEOUS EFFECTS OF INVENTION

According to the present invention, it is easier to improve the viewability for the driver of the driver's vehicle and to reduce the glare experienced by a traffic participant at the same time.

### BRIEF DESCRIPTION OF DRAWINGS

[Fig. 1] Fig. 1 is a block diagram of a vehicle lamp system according to the embodiment;
[Fig. 2] Fig. 2A shows an image obtained while a reference light distribution pattern is being formed.
Fig. 2B shows a result of analysis by the brightness analysis unit.
[Fig. 3] Fig. 3 shows a transition of the illuminance of the subject light related to the high-brightness light spot originating from a light-reflecting object.
[Fig. 4] Fig. 4 shows a transition of the illuminance of the subject light associated with the high-brightness light spot originating from a self-luminous body.
[Fig. 5] Fig. 5 shows an example of light distribution control.

### DESCRIPTION OF EMBODIMENTS

Hereinafter, the invention will be described based on preferred embodiments with reference to drawings. The embodiments do not limit the scope of the invention but exemplify the invention. Not all of the features and the combinations thereof described in the embodiments are necessarily essential to the invention. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

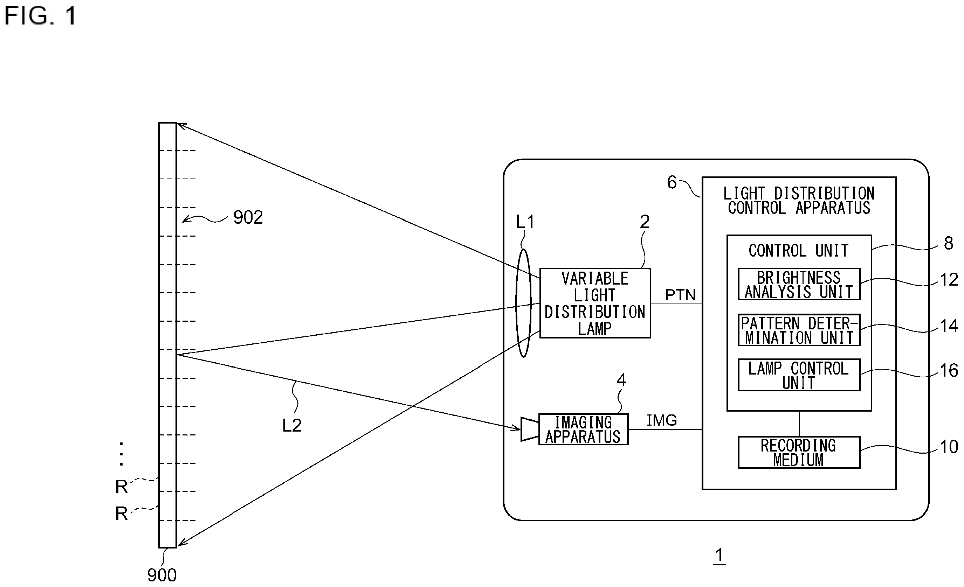

Fig. 1 is a block diagram of a vehicle lamp system 1 according to the embodiment. Fig. 1 depicts some of the constituting elements of the vehicle lamp system 1 as functional blocks. The functional blocks are implemented in hardware such as devices and circuits exemplified by a CPU and a memory of a computer, and in software such as a computer program. It will be understood by those skilled in the art that these functional blocks may be implemented in a variety of forms by combinations of hardware and software.

The vehicle lamp system 1 includes a variable light distribution lamp 2, an imaging apparatus 4, and a light distribution control apparatus 6. These may be built in the same housing, or some of the members may be provided outside the housing. For example, the variable light distribution lamp 2, the imaging apparatus 4, and the light distribution control apparatus 6 are housed in a lamp chamber. The lamp chamber is compartmentalized by a lamp body having an opening on the frontward side of the vehicle and a translucent cover attached to cover the opening of the lamp body. The imaging apparatus 4 and the light distribution control apparatus 6 may be provided outside the lamp chamber, and, for example, provided on the side of the vehicle. In this case, the imaging apparatus 4 may be a vehicle-mounted camera. The light distribution control apparatus 6 may be formed by a vehicle ECU in the entirety or in part. The vehicle equipped with the vehicle lamp system 1 may be a rideable saddle vehicle such as a motorcycle or a vehicle such as a four-wheel vehicle other than rideable saddle vehicles.

The variable light distribution lamp 2 is adapted to radiate a variable intensity distribution visible light beam L1 to an area in front of the driver's vehicle. In other words, the variable light distribution lamp 2 can irradiate the space in front of the driver's vehicle with a light having an illuminance that varies depending on the location. In the following, an individual space that can be irradiated by the variable light distribution lamp 2 with a light having a variable illuminance is referred to as an individual region R. A plurality of individual regions R may, for example, be arranged in a row in the vehicle width direction or arranged in a matrix. The variable light distribution lamp 2 receives information designating a light distribution pattern PTN from the light distribution control apparatus 6 and outputs the visible light beam L1 having an intensity distribution determined by the light distribution pattern PTN. Thereby, the light distribution pattern PTN is formed in front of the vehicle. The light distribution pattern PTN is understood to be a two-dimensional illuminance distribution of an irradiation pattern 902 that the variable light distribution lamp 2 forms on a vertical virtual screen 900 in front of the driver's vehicle.

The embodiment is non-limiting as to the configuration of the variable light distribution lamp 2. For example, the variable light distribution lamp 2 includes a plurality of light sources arranged in a horizontal row or in a matrix and a lighting circuit that drives the light sources independently to light the light sources. Preferable examples of the light source include a semiconductor light source such as a LED (light emitting device), a LD (laser diode), and an organic or inorganic EL (electroluminescence). Each individual region R and each light source are associated with each other, and each individual region R is individually irradiated with a light from each light source.

The resolution, in other words, the light distribution resolution of the variable light distribution lamp 2 is, for example, about 4 pixels-20 pixels in the case that the light sources are arranged in a horizontal row and about 1000 pixels-2000000 pixels in the case that the light sources are arranged in a matrix. The resolution of the variable light distribution lamp 2 means the number of unit regions in the light distribution pattern PTN in which the illuminance can be varied independently. By way of one example, each unit region is associated one to one with each individual region R.

For formation of an illuminance distribution determined by the light distribution pattern PTN, the variable light distribution lamp 2 may include a pattern formation device of matrix type such as a DMD (Digital Mirror Device) and a liquid crystal device or include a pattern formation device of optical scan type configured to scan an area in front of the driver's vehicle with a light from the light source.

The imaging apparatus 4 is exemplified by a camera and has sensitivity in the visible light region and images an area in front of the driver's vehicle repeatedly. The imaging apparatus 4 images a reflected light L2 from an object in front of a vehicle reflecting the visible light beam L1. Further, the imaging apparatus 4 images a light radiated by vehicles in front, which include leading vehicles and oncoming vehicles, and a light radiated by a self-luminous body such as a streetlight and an electronic message board. An image IMG generated by the imaging apparatus 4 is transmitted to the light distribution control apparatus 6. The image IMG is also transmitted to the vehicle ECU. The vehicle ECU can use the acquired image IMG in object recognition in ADAS or automatic driving.

The image IMG acquired by the light distribution control apparatus 6 from the imaging apparatus 4 may be RAW image data or image data subjected to a predetermined image process by the imaging apparatus 4. Reception by the light distribution control apparatus 6 of image data derived from subjecting the RAW image data generated by the imaging apparatus 4 to an image process by a processing apparatus other than the imaging apparatus 4 also represents acquisition of the image IMG from the imaging apparatus 4. In the following description, "the image IMG based on the imaging apparatus 4" means whichever of RAW image data and data subjected to an image process. Both of the image data may be expressed as "image IMG" without making any distinction therebetween. The resolution of the imaging apparatus 4 is, for example, 300000 pixels-5000000 pixels.

The light distribution control apparatus 6 uses the image IMG based on the imaging apparatus 4 to performs ADB control for dynamically and adaptively controlling formation of the light distribution pattern PTN by the variable light distribution lamp 2. The light distribution control apparatus 6 may be comprised of a digital processor. For example, the light distribution control apparatus 6 may be comprised of a combination of a microcomputer, including a CPU, and a software program. The light distribution control apparatus 6 may alternatively be comprised of a FPGA (Field Programmable Gate Array), an ASIC (Application Specified IC), or the like.

The light distribution control apparatus 6 includes a control unit 8 comprised of a CPU, etc., and a recording medium 10 comprised of a memory or a storage. The control unit 8 includes, by way of one example, a brightness analysis unit 12, a pattern determination unit 14, and a lamp control unit 16. The recording medium 10 stores a computer program executed by the light distribution control apparatus 6 (more specifically, the control unit 8), etc. Each part included in the control unit 8 operates by executing, in the integrated circuit constituting the part, the program stored in the recording medium 10.

The brightness analysis unit 12 uses the image IMG to analyze the brightness in each individual region R. In brightness analysis, the brightness analysis unit 12 uses, for example, a predetermined brightness threshold value to binarize the brightness value of each pixel in the image IMG. The brightness analysis unit 12 identifies a predetermined high-brightness pixel included in a binarized image. The brightness analysis unit 12 transmits an analysis result to the pattern determination unit 14. The brightness threshold value can be defined as appropriate based on an experiment or simulation and is stored in a recording medium 10 in advance.

The pattern determination unit 14 defines the illuminance of light irradiating each individual region R based on the analysis result of the brightness analysis unit 12 and determines the light distribution pattern PTN formed in an area in front. When determining the light distribution pattern PTN, the pattern determination unit 14 adjusts the illuminance of light irradiating the individual region R where the object forming the high-brightness light spot is located so that the brightness value of the high-brightness light spot included in the image IMG, i.e., the pixel value of the pixel forming the high-brightness light spot approaches a predetermined target low-brightness. Information related to the target low brightness is stored in the recording medium 10 in advance. The target low brightness is brightness that reduces the glare experienced by the driver of the driver's vehicle from a light reflected from a light-reflecting object and makes the light-reflecting object visible to the driver of the driver's vehicle. The target low brightness can be defined as appropriate based on an experiment or simulation. The target low brightness of the embodiment is lower than the brightness threshold value, but the target low brightness may have the same value as the brightness threshold value. The pattern determination unit 14 transmits information related to the determined light distribution pattern PTN to the lamp control unit 16.

The lamp control unit 16 directs the variable light distribution lamp 2 to form the light distribution pattern PTN. The lamp control unit 16 is comprised of, for example, a publicly known LED driver module (LDM), etc. In the case the dimming method of the light source of the variable light distribution lamp 2 is analog dimming, the lamp control unit 16 adjusts the DC level of the driving current flowing in the light source. Further, in the case the dimming method of the light source is PWM (Pulse Width Modulation) dimming, the lamp control unit 16 adjusts the average level of the driving current by switching the current flowing in the light source and adjusting the ratio of the on period. Further, in the case the variable light distribution lamp 2 includes a DMD, the lamp control unit 16 controls on/off switching of each mirror element constituting the DMD. In the case the variable light distribution lamp 2 includes a liquid crystal device, the lamp control unit 16 controls the light transmittance of the liquid crystal device. Thereby, the light distribution pattern PTN is formed in front of the vehicle.

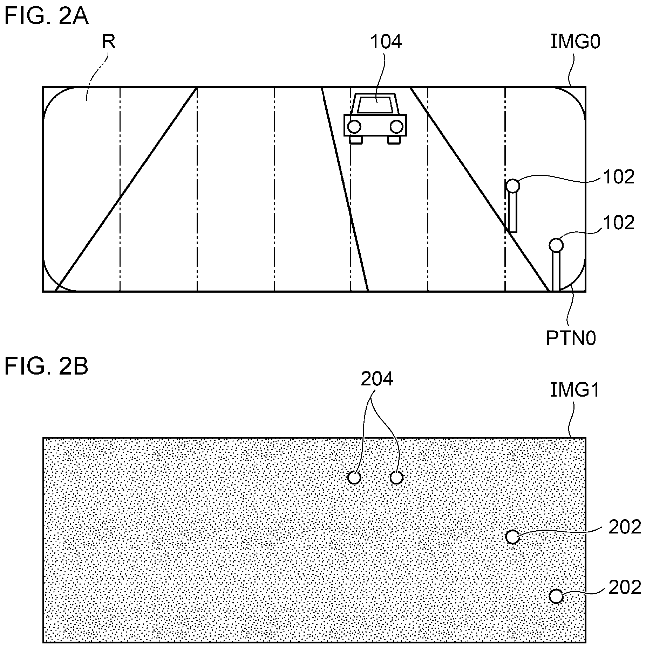

A more detailed description will be given of light distribution control executed by the light distribution control apparatus 6. Fig. 2A shows an image IMGO obtained while a reference light distribution pattern PTNO is being formed. Fig. 2B shows a result of analysis by the brightness analysis unit 12. Fig 2A shows seven individual regions R arranged in a horizontal row, but the number and arrangement of individual regions R are not limited to these.

In one example of light distribution control, the lamp control unit 16 first controls the variable light distribution lamp 2 to form the reference light distribution pattern PTNO. Information related to the reference light distribution pattern PTNO is stored in the recording medium 10 in advance. When the reference light distribution pattern PTNO is formed, the image IMGO showing a situation in front of the driver's vehicle while the reference light distribution pattern PTNO is being formed is generated by the imaging apparatus 4 as shown in Fig. 2A.

The reference light distribution pattern PTNO is a light distribution pattern of fixed illuminance that does not depend on the brightness value of each individual region R. Therefore, the reference light distribution pattern PTNO does not include a shielded-light portion or a reduced-light portion described later. The reference light distribution pattern PTNO by way of one example is a light distribution pattern irradiating substantially the entirety of the imaging range of the imaging apparatus 4 with a light having the predetermined maximum illuminance.

The brightness analysis unit 12 identifies a high-brightness light spot by using the image IMGO obtained when the reference light distribution pattern PTNO is formed. In other words, the brightness analysis unit 12 subjects the image IMGO to binarization of brightness value, by using the aforementioned brightness threshold value. In the example shown in Fig. 2A, a delineator 102 and an oncoming vehicle 104 are located in front of the vehicle. The delineator 102 that is a light-reflecting object is imaged as a high-brightness light spot while the reference light distribution pattern PTNO is being formed. A light-reflecting object in the present disclosure is of at least one type selected from a group consisting of the road sign, the delineator 102, or the signboard. Alternatively, a light-reflecting object is an object having a recursive reflecting surface at least in a portion visible from the driver's vehicle. Further, the head lamp of the oncoming vehicle 104 is a self-luminous body and so is imaged as a high-brightness light spot.

Therefore, as shown in Fig. 2B, a binarized image IMG1 obtained by binarization of the image IMGO includes a high-brightness light spot 202 originating from the delineator 102 and a high-brightness light spot 204 corresponding to the head lamp of the oncoming vehicle 104. Therefore, the brightness analysis unit 12 can identify the high-brightness light spots 202, 204 from the binarized image IMG1. Each of the high-brightness light spots 202, 204 is, by way of one example, a set of a plurality of pixels.

The pattern determination unit 14 defines the light irradiating the individual region R where the object forming the high-brightness light spot 202, 204 is located as a target subject to illuminance adjustment. Hereinafter, the light will be referred to as a subject light. Further, the individual region R irradiated with the subject light will be referred to as a subject individual region. Further, the pixel that captures the subject individual region is referred to as a subject pixel. The light irradiating the individual region R around the individual region R where the object forming the high-brightness light spot 202, 204 is located may also be included in the subject light. When the individual regions R are arranged in a matrix, in particular, it could prove effective to include the light irradiating the surrounding individual region R in the subject light.

For example, the light irradiating the individual region R where the driver of the oncoming vehicle 104 is located could be included in the subject light. That the high-brightness light spot 204 originates from the head lamp of the oncoming vehicle 104 can be estimated based on the fact that high-brightness light spots 204 are identified in pairs, i.e., that the two high-brightness light spots 204 are arranged at a predetermined interval in the vehicle width direction or based on the position of the high-brightness light spot 204 in the binarized image IMG1. Further, the position where the driver of the oncoming vehicle 104 is located can be estimated based on the position of the high-brightness light spot 204. The above explanation also applies to the case of the leading vehicle. The shielded-light portion for the driver of the oncoming vehicle 104 may be defined in separate light distribution control. In this case, the process of determining the type of object that forms the high-brightness light spot may be omitted in light distribution control according to the embodiment.

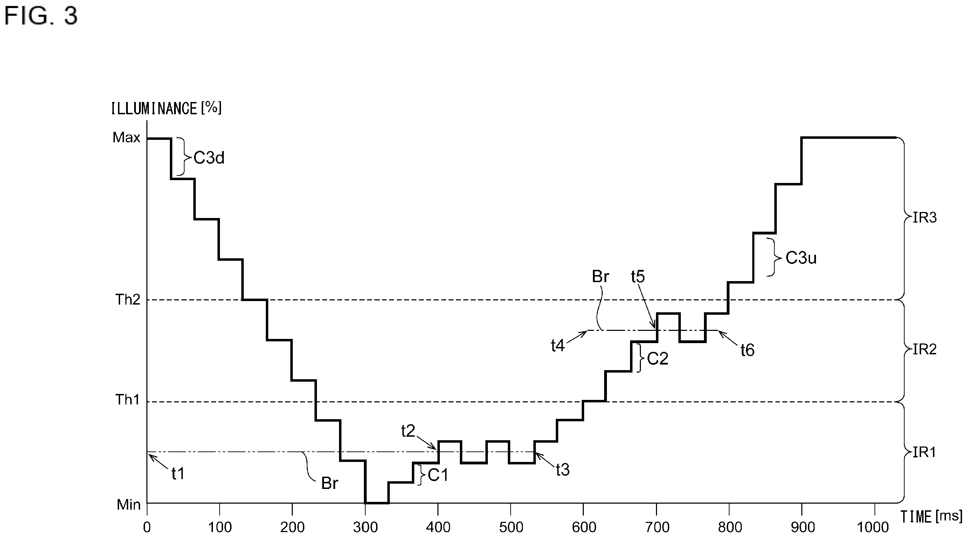

Fig. 3 shows a transition of the illuminance of the subject light associated with the high-brightness light spot 202 originating from a light-reflecting object. The vertical axis of Fig. 3 represents the illuminance defined as a fraction of the 100% illuminance at the maximum rating of the variable light distribution lamp 2. In the following description, the illuminance at the maximum rating will be referred to as the upper limit illuminance. In the case that the dimming method of the light source is PWM dimming, for example, the illuminance can be translated into the ratio of the on period, i.e., the duty ratio. The horizontal axis represents time.

the pattern determination unit 14 reduces the illuminance of the subject light irradiating the individual region R where the delineator 102 is located to the predetermined minimum illuminance by a third decremental amount C3d, when the high-brightness light spot 202 is detected in the individual region R irradiated with a light having the maximum illuminance. The time t1 in Fig. 3 represents a point of time when the delineator 102 appears in the subject individual region. For example, the maximum illuminance is 90% of the upper limit illuminance, and the minimum illuminance is 0% of the upper limit illuminance. The maximum illuminance and the minimum illuminance are not limited to these values and can be set as appropriate based on an experiment or simulation.

In the embodiment, the illuminance level decreased by updating the light distribution pattern PTN once when the illuminance is decreased from the maximum illuminance to the minimum illuminance is stored in advance in the recording medium 10 as a principle decremental amount. Further, the illuminance level increased by updating the light distribution pattern PTN once when the illuminance is increased from the minimum illuminance to the maximum illuminance is stored in advance in the recording medium 10 as a principle incremental amount. The principle decremental amount is determined based on the time to reduce the illuminance from the maximum illuminance to the minimum illuminance and the number of light distribution patterns PTN that can be updated by the variable light distribution lamp 2 within this time. The principle incremental amount is determined based on the time to increase the illuminance from the minimum illuminance to the maximum illuminance and the number of light distribution patterns PTN that can be updated by the variable light distribution lamp 2 within this time.

The time to reduce the illuminance from the maximum illuminance to the minimum illuminance and the time to increase the illuminance from the minimum illuminance to the maximum illuminance can be set in consideration of circumstances such as discomfort experienced by the driver of the driver's vehicle due to a sudden change in illuminance, glare experienced by the driver of the vehicle in front, pedestrians, etc. due to a slow change in illuminance, and reduced viewability experienced by the driver of the driver's vehicle due to a slow change in illuminance. By way of example, the third decremental amount C3d is the principle decremental amount.

When the illuminance of the subject light reaches the minimum illuminance, the high-brightness light spot 202 originating from the light-reflecting object disappears from the image IMG. For this reason, the pattern determination unit 14 gradually increases the illuminance of the subject light to bring the brightness value of the subject pixel closer to the target low brightness. This results in formation of a reduced-light portion corresponding to the delineator 102 in the light distribution pattern PTN. In this disclosure, that the reduced-light portion "corresponds to the delineator 102" and the shielded-light portion described later "corresponds to the oncoming vehicle 104" means that, when the light distribution pattern PTN is projected forward, the reduced-light portion overlaps the delineator 102, and the shielded-light portion overlaps the oncoming vehicle 104.

The pattern determination unit 14 of the embodiment changes the illuminance by different amounts when changing the illuminance in the first illuminance region IR1, when changing the illuminance in the second illuminance region IR2, and when changing the illuminance in the third illuminance region IR3.

The first illuminance region IR1 belongs to an illuminance range equal to or below a predetermined first illuminance threshold value Th1. The second illuminance region IR2 belongs to an illuminance range above the first illuminance threshold value Th1 and equal or below a second illuminance threshold value Th2 greater than the first illuminance threshold value Th1. The third illuminance region IR3 belongs to an illuminance range above the second illuminance threshold value Th2. The first illuminance region IR1 may be the whole or a part of an illuminance range equal to or below the first illuminance threshold value Th1. The second illuminance region IR2 may be the whole or a part of an illuminance range above the first illuminance threshold value Th1 and equal to below the second illuminance threshold value Th2. The third illuminance region IR3 may be the whole or a part of an illuminance range above the second illuminance threshold value Th2.

By way of example, the first illuminance threshold value Th1 is 25% of the upper limit illuminance, and the second illuminance threshold value Th2 is 50% of the upper limit illuminance. Further, the first illuminance region IR1 is the entire range equal to or above the minimum illuminance and equal to or below the 25% illuminance. The second illuminance region IR2 is the entire range of illuminance greater than 25% and equal to or below the 50%. The third illuminance region IR3 is the entire range of illuminance above 50% and equal to or below the maximum illuminance.

The first illuminance threshold value Th1 is, for example, the upper limit of illuminance that does not expose a traffic participant to glare even if a light having an illuminance equal to or below the threshold value is radiated for a relatively long period of time. The second illuminance threshold value Th2 is, for example, the upper limit of illuminance that does not expose a traffic participant to glare if a light having an illuminance equal to or below the threshold value is radiated for a relatively short period of time. The first illuminance threshold value Th1 and the second illuminance threshold value Th2 can be set as appropriate based on an experiment or simulation and are stored in the recording medium 10 in advance.

When changing the illuminance in the first illuminance region R1, the pattern determination unit 14 changes the illuminance by the first amount of change C1 smaller than the amount of change for changing the illuminance in the illuminance region above the first illuminance threshold value Th1, i.e., the second illuminance region IR2 and the third illuminance region IR3. In the first illuminance region IR1, therefore, the illuminance of the subject light increases by the first amount of change C1 with each update of the light distribution pattern PTN. The absolute value of the first amount of change C1 is smaller than the absolute value of each of the principle decremental amount, the principle incremental amount, and the third decremental amount C3 and also the absolute value of each of the amount of change C2 and the third incremental amount C3u.

The pattern determination unit 14 changes the illuminance by the first amount of change C1 in the first illuminance region IR1 on the condition that the illuminance change occurs after the minimum illuminance is passed and before the maximum illuminance is reached. In other words, the pattern determination unit 14 performs control to increase the illuminance of the subject light by an incremental amount different from the principle incremental amount, in response to the illuminance of the subject light reaching the minimum illuminance. This can minimize the illuminance of the subject light quickly first of all in the event that a high-brightness light spot is detected. Therefore, the glare experienced by a traffic participant can be reduced more reliably in the case the high-brightness light spot originates from the traffic participant.

The illuminance of the subject light is such that the brightness value of the subject pixel exceeds the target low brightness Br at a point of time t2 in the example shown in Fig. 3. Thus, the pattern determination unit 14 reduces the illuminance of the subject light in the light distribution pattern PTN to be formed next. In the embodiment, the illuminance in the first illuminance region IR1 is reduced also by the first amount of change C1. This causes the illuminance of the subject light to be such that the brightness value of the subject pixel is lower than the target low brightness Br again. Subsequently, an increase by the first amount of change C1 and a decrease by the first amount of change C1 are repeated. The first amount of change C1 may have a different value when the illuminance is increased and when the illuminance is decreased.

Even if the illuminance of the subject light is increased or decreased repeatedly, the amount of change is the first amount of change C1 and is small enough. For this reason, it is extremely unlikely that the driver of the driver's vehicle will view it as a flicker. Further, responsiveness in the event of appearance of a new traffic participant in the subject individual region could be reduced in the case of changing the illuminance by the first amount of change C1. Since the illuminance is equal to or below the first illuminance threshold value Th1, however, it is possible to suppress exposure of the new traffic participant to glare.

The target low brightness Br is determined from the perspective of glare and viewability experienced by the driver of the driver's vehicle and so can have the same value uniformly regardless of the type of the light-reflecting object. On the other hand, the illuminance corresponding to the target low brightness Br differs depending on the light reflectance of the object, etc., given the same target low brightness Br. The illuminance corresponding to the target low brightness Br is the illuminance that causes the brightness value of the pixel capturing the object irradiated with the light having that illuminance to present the target low brightness Br. The illuminance corresponding to the target low brightness Br will be referred to as a target illuminance hereinafter. The target illuminance is relatively low in the case of an object having a relatively high light reflectance, such as the delineator 102, and is relatively high in the case of an object having a relatively low light reflectance, such as a pedestrian. The delineator 102 has high a light reflectance, and so the target illuminance is included in the first illuminance region IR1.

A point of time t3 in Fig. 3 indicates a point of time when the delineator 102 disappears from the subject individual region. When the delineator 102 disappears, reflection of light in the subject individual region disappears, and the brightness value of the subject pixel becomes virtually zero. For this reason, the pattern determination unit 14 increases the illuminance of the subject light in increments of the first amount of change C1. As a result, the illuminance of the subject light exceeds the first illuminance threshold value Th1 and reaches the second illuminance region IR2.

When changing the illuminance in the second illuminance region IR2, the pattern determination unit 14 changes the illuminance by the second amount of change C2 smaller than the amount of change for changing the illuminance in the illuminance region above the second illuminance threshold value Th2, i.e., in the third illuminance region IR3. The absolute value of the second amount of change C2 is greater than the absolute value of the first amount of change C1 and is smaller than the absolute value of each of the third decremental amount C3d, the third incremental amount C3u, the principle decremental amount, and the principle incremental amount. Therefore, the illuminance of the subject light increases faster in the second illuminance region IR2 than in the first illuminance region IR1.

A point of time t4 in Fig. 3 indicates a point of time when a new object appears in the subject individual region. The target illuminance of this object is higher than the target illuminance of the delineator 102 and is included in the second illuminance region IR2. Such an object is exemplified by a pedestrian having a lower light reflectance than the delineator 102. This object will hereinafter be referred to as a low light-reflecting object.

The illuminance of the subject light exceeds the target illuminance of the low light-reflecting object at a point of time t5 in the example shown in Fig. 3. Thus, the pattern determination unit 14 reduces the illuminance of the subject light in the light distribution pattern PTN to be formed next. In the embodiment, the illuminance in the second illuminance region IR2 is reduced also by the second amount of change C2. As a result, the illuminance of the subject light will be such that the brightness value of the subject pixel is lower than the target low brightness Br again. This causes the illuminance of the subject light to be lower than the target low illuminance again. Subsequently, an increase by the second amount of change C2 and a decrease by the second amount of change C2 are repeated. The second amount of change C2 may have a different value when the illuminance is increased and when the illuminance is decreased.

Even if the illuminance of the subject light is increased or decreased repeatedly across the target illuminance of the low light-reflecting object, the amount of change is the second amount of change C2 and is small enough. For this reason, it is unlikely that the driver of the driver's vehicle will view it as a flicker. Further, responsiveness in the event of appearance of a new traffic participant in the subject individual region could be reduced in the case of changing the illuminance by the second amount of change C2. Since the illuminance is equal to or below the second illuminance threshold value Th2, however, it is possible to suppress exposure of a new traffic participant to glare.

A point of time t6 in Fig. 3 indicates a point of time when a low light-reflecting object disappears from the subject individual region. When the low light-reflecting object disappears, reflection of light in the subject individual region disappears, and the brightness value of the subject pixel becomes virtually zero. For this reason, the pattern determination unit 14 increases the illuminance of the subject light in increments of the second amount of change C2. As a result, the illuminance of the subject light exceeds the second illuminance threshold value Th2 and reaches the third illuminance region IR3.

The pattern determination unit 14 increases the illuminance by the third incremental amount C3u when increasing the illuminance in the third illuminance region IR3. The third incremental amount C3u is greater than the first amount of change C1 and the second amount of change C2. Therefore, the illuminance of the subject light increases faster in the third illuminance region IR3 than in the second illuminance region IR2. The illuminance of the subject light is ultimately restored to the maximum illuminance. By way of example, the third incremental amount C3u is the principle incremental amount.

Further, the pattern determination unit 14 decreases the illuminance by the third decremental amount C3d when decreasing the illuminance in the event of appearance of a new traffic participant, etc. in the subject individual region while the illuminance is being included in the third illuminance region IR3. By way of example, the third incremental amount C3u is smaller than the third decremental amount C3d. In this case, reduction of the glare for the traffic participant can be prioritized. By way of another example, the third incremental amount C3u is equal to or greater than the third decremental amount C3d. Preferably, the third incremental amount C3u is greater than the third decremental amount C3d. In this case, viewability for the driver of the driver's vehicle can be prioritized.

Based on the above description, the first illuminance region IR1 can be regarded as a region in which the illuminance of the subject light is changed at a low speed, the second illuminance region IR2 is regarded as a region in which the illuminance of the subject light is changed at a medium speed, and the third illuminance region IR3 is regarded as a region in which the illuminance of the subject light is changed at a high speed.

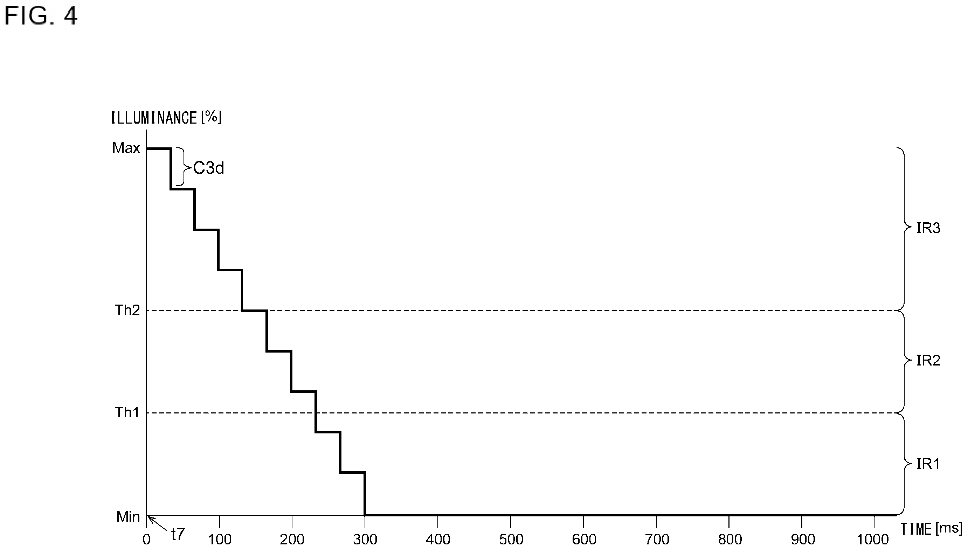

Fig. 4 shows a transition of the illuminance of the subject light associated with the high-brightness light spot 204 originating from a self-luminous body. The vertical and horizontal axes in Fig. 4 are the same as those in Fig. 3. When the high-brightness light spot 204 is detected in the individual region R irradiated with a light having the maximum illuminance, the pattern determination unit 14 reduces the illuminance of the subject light irradiating the individual region R where the oncoming vehicle 104 is located to the predetermined minimum illuminance in decrements of the third decremental amount C3d. A point of time t7 in Fig. 4 indicates a point of time when the oncoming vehicle 104 appears in the subject individual region.

Since the head lamp of oncoming vehicle 104 forming the high-brightness light spot 204 is a self-luminous body, the brightness value of the subject pixel does not change even if the illuminance of the subject light is reduced to the minimum illuminance. Therefore, the pattern determination unit 14 cannot turn to control the increase the illuminance of the subject light. As a result, as shown in Fig. 4, the illuminance of the subject light is maintained at the lowest illuminance. This forms a shielded-light portion corresponding to the oncoming vehicle 104 in the light distribution pattern PTN. The shielded-light portion can also be interpreted as the reduced-light portion of the minimum illuminance. The illuminance of light other than the subject light is maintained at, for example, the maximum illuminance. The pattern determination unit 14 sends information related to the determined light distribution pattern PTN to the lamp control unit 16.

As described above, the lamp control unit 16 controls the variable light distribution lamp 2 to form the reference light distribution pattern PTNO that does not include a shielded-light portion or a reduced-light portion when the first light distribution pattern PTN in light distribution control is formed. In subsequent light distribution control, the light distribution pattern PTN, in which the illuminance of the subject light is adjusted as described above, i.e., which includes a shielded-light portion or a reduced-light portion, is formed when the image IMG includes a high-brightness light spot.

The pattern determination unit 14 detects the brightness value of the identified subject pixel in the image IMG obtained while the updated light distribution pattern PTN is being formed and determines the next light distribution pattern PTN based on the detection result. Further, the brightness analysis unit 12 performs a process of identifying a high-brightness light spot by using the image IMG. This allows detection of the appearance of a new high-brightness light spot.

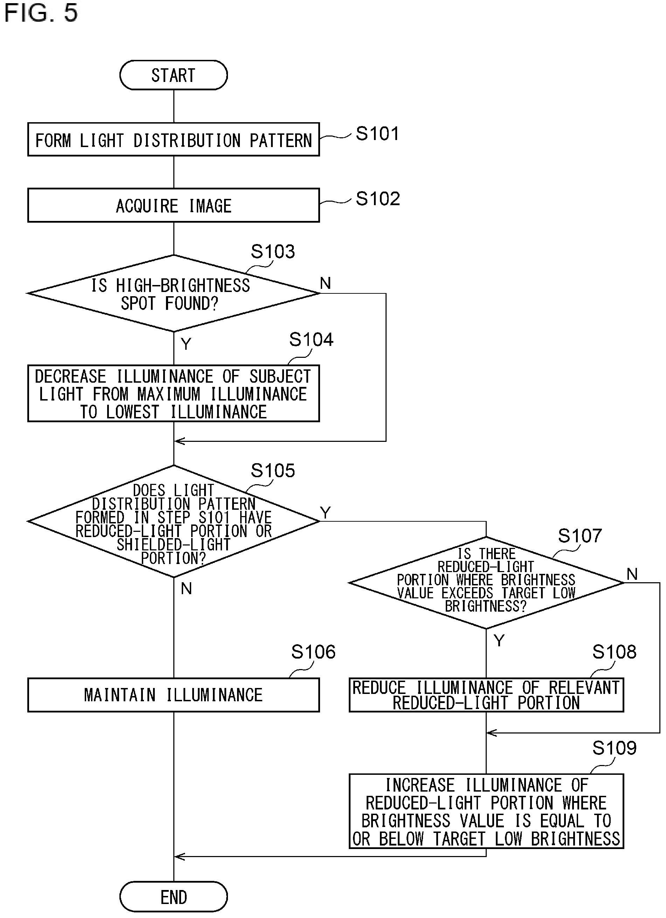

Fig. 5 shows an example of light distribution control. The flow is, for example, initiated by an instruction for execution of light distribution control via a light switch (not shown) and is repeatedly executed at predetermined points of time when the ignition is turned on.

The light distribution control apparatus 6 controls the variable light distribution lamp 2 to form a light distribution pattern PTN (S101). If it is the first light distribution pattern formation in light distribution control, the light distribution control apparatus 6 controls the variable light distribution lamp 2 to form the reference light distribution pattern PTNO. Further, the light distribution control apparatus 6 generates a formation flag indicating the formation of the light distribution pattern PTN and stores the flag in a memory. Whether it is the first light distribution pattern formation can be determined based on the presence or absence of this formation flag. If it is not the first light distribution pattern formation, the variable light distribution lamp 2 is controlled to form the light distribution pattern PTN determined in the previous routine. Subsequently, the light distribution control apparatus 6 acquires the image IMG from the imaging apparatus 4 (S102) and determines whether a high-brightness light spot is found in the image IMG (S103).

If a high-brightness light spot is found (Y in S103), the light distribution control apparatus 6 decreases the illuminance of the subject light from the maximum illuminance to the lowest illuminance. In other words, the light distribution control apparatus 6 establishes a shielded-light portion in the light distribution pattern PTN to be formed next (S104). When the illuminance of the subject light is less than the maximum illuminance, the illuminance is maintained in this step. When a high-brightness light spot is not found (N in S103), the light distribution control apparatus 6 skips step S104.

The light distribution control apparatus 6 then determines whether the light distribution pattern PTN formed in step S101 has a reduced-light portion or a shielded-light portion (S105). When the light distribution pattern PTN does not have a reduced-light portion or a shielded-light portion (N in S105), the light distribution control apparatus 6 maintains the illuminance of light irradiating each individual region R (S106) and ends the routine. The light distribution pattern PTN determined via step S106 is formed in step S101 in the next routine.

When the light distribution pattern PTN formed in step S101 has a reduced-light portion or a shielded-light portion (Y in S105), the light distribution control apparatus 6 determines whether there is a reduced-light portion where the brightness value of the subject pixel exceeds the target low brightness (S107). When there is a reduced-light portion where the brightness value exceeds the target low brightness (Y in S107), the light distribution control apparatus 6 reduces the illuminance of the relevant reduced-light portion by an amount of change determined by the illuminance region that includes the illuminance (S108). When there is not any reduced-light portion where the brightness value exceeds the target low brightness (N in S107), the light distribution control apparatus 6 skips step S108.

The light distribution control apparatus 6 then increases the illuminance of the reduced-light portion where the brightness value of the corresponding pixel is equal or below the target low brightness by an amount of change determined by the illuminance region that includes the illuminance (S109) and ends the routine. The light distribution pattern PTN determined via step S109 is formed in step S101 in the next routine. It will be noted that the process in step S109 is substantially omitted when the light distribution pattern PTN only has a reduced-light portion where the brightness value exceeds the target low brightness. Further, the formation flag indicating the formation of the light distribution pattern PTN is removed when an instruction to stop light distribution control is given via a light switch or when the ignition is turned off.

The embodiment covers a computer program executed by the light distribution control apparatus 6. This computer program causes the light distribution control apparatus 6 to perform the function of changing, when changing the illuminance in the illuminance in the first illuminance region R1 equal to or below a predetermined first illuminance threshold value Th1, the illuminance by the first amount of change C1 smaller than the amount of change for changing the illuminance in the illuminance region above the first illuminance threshold value Th1. Further, the embodiment also covers a recording medium 10 that stores the computer program.

As described above, the light distribution control apparatus 6 according to the embodiment changes the illuminance in the first illuminance region IR1 equal to or below the first illuminance threshold value Th1 by the first amount of change C1 smaller than the amount of change in the second illuminance region IR2, the third illuminance region IR3 exceeding the first illuminance threshold value Th1. In the case of a low-illuminance light included in the first illuminance region IR1, it is unlikely that a traffic participant experiences glare even if the traffic participant is irradiated with the light. For this reason, the amount of change in illuminance can be set to be small. It is possible to make it difficult for the driver of the driver's vehicle to feel a flicker by reducing the amount of change in illuminance. Therefore, it is easier to improve the viewability for the driver of the driver's vehicle and to reduce the glare experienced by a traffic participant at the same time.

Further, the light distribution control apparatus 6 adjusts the illuminance of the subject light so that the brightness value of the pixel forming the high-brightness light spot 202 caused by the light-reflecting object approaches the target low brightness. This makes it possible to maintain viewability of the light-reflecting object for the driver of the driver's vehicle while also reducing the glare caused by the light-reflecting object.

Recently, research and development of advanced driver-assistance systems (ADAS) and automatic driving technologies have been pursued as a technology to assist a driver driving a vehicle. In ADAS and automatic driving technologies, a situation in front of the driver's vehicle is identified by an imaging device such as a camera (mechanical eyes), and vehicle control adapted to the situation is executed. When a high-brightness light is reflected from a light-reflecting object, overexposure is produced in the image generated by the imaging device, which could impede understanding of the situation. When light irradiation of the light-reflecting object is weakened, it will be difficult to detect the light-reflecting object with the imaging device. For this reason, light distribution control according to the embodiment is also useful for improvement of precision in ADAS and automatic driving technologies.

Further, the light distribution control apparatus 6 changes the illuminance in the second illuminance region IR2 above the first illuminance threshold value Th1 and equal to or below the second illuminance threshold value Th2 by the second amount of change C2 smaller than the amount of change in the third illuminance region IR3 above the second illuminance threshold value Th2. This makes it easier to improve the viewability for the driver of the driver's vehicle and to reduce the glare experienced by a traffic participant at the same time. It is expected that objects for which the target illuminance is included in the second illuminance region IR2 are fewer than objects for which the target illuminance is included in the first illuminance region IR1. Therefore, it may not be necessary to distinguish between the second illuminance region IR2 and the third illuminance region IR3. Further, the light distribution control apparatus 6 may have three or more illuminance threshold values. In this case, the amount of change in illuminance is adjusted by in four or more illuminance regions distinct from each other.

Further, the light distribution control apparatus 6 decreases the illuminance by the third decremental amount C3d and increases the illuminance by the third incremental amount C3u smaller than the third decremental amount C3d in the third illuminance region IR3 above the second illuminance threshold value Th2. In this case, reduction of the glare for the traffic participant can be prioritized. Alternatively, the light distribution control apparatus 6 decreases the illuminance by the third decremental amount C3d and increases the illuminance by the third incremental amount C3u equal to or greater than the third decremental amount C3d in the third illuminance region IR3. In this case, viewability for the driver of the driver's vehicle can be prioritized.

Further, the light distribution control apparatus 6 reduces the illuminance of the subject light to the minimum illuminance by the third decremental amount C3d when the high-brightness light spot 202, 204 is detected in the area in front irradiated with a light having the maximum illuminance. The light distribution control apparatus 6 changes the illuminance by the first amount of change C1 in the first illuminance region IR1 on the condition that the illuminance change occurs after the minimum illuminance is passed and before the maximum illuminance is reached. This can further reduce the glare for a traffic participant.

The embodiment of the present invention is described above in detail. The embodiment described above is merely a specific example of practicing the present invention. The details of the embodiment shall not be construed as limiting the technical scope of the present invention. A number of design modifications such as modification, addition, deletion, etc. of constituting elements may be made to the extent that they do not depart from the idea of the invention defined by the claims. New embodiments with design modifications will provide the combined advantages of the embodiment and the variation. Although the details subject to such design modification are emphasized in the embodiment by using phrases such as "of the embodiment" and "in the embodiment", details not referred to as such are also subject to design modification. Any combination of the above constituting elements is also useful as a mode of the present invention. Hatching in the cross section in the drawings should not be construed as limiting the material of the hatched object.

The invention according to the embodiment described above may be defined by the following items.

### [Item 1]

A light distribution control apparatus (6) adapted to control formation of a light distribution pattern (PTN) by a variable light distribution lamp (2) by using an image (IMG) based on an imaging apparatus (4) that images an area in front of a vehicle,
wherein, when changing an illuminance in a first illuminance region (IR1) equal to or below a predetermined first illuminance threshold value (Th1), the light distribution control apparatus (6) changes the illuminance by a first amount of change (C1) smaller than an amount of change (C2, C3d, C3u) for changing the illuminance in an illuminance region (IR2, IR3) above the first illuminance threshold value (Th1).

### [Item 2]

The light distribution control apparatus (6) according to Item 1, wherein, when changing the illuminance in a second illuminance region (IR2) above the first illuminance threshold value (Th1) and equal to or below a second illuminance threshold value (Th2) greater than the first illuminance threshold value (Th1), the light distribution control apparatus (6) changes the illuminance by a second amount of change (C2) smaller than an amount of change (C3d, C3u) for changing the illuminance in an illuminance region (IR3) above the second illuminance threshold value (Th2).

### [Item 3]

The light distribution control apparatus (6) according to Item 2, wherein the light distribution control apparatus (6) decreases the illuminance by a third decremental amount (C3d) when decreasing the illuminance in a third illuminance region (IR3) above the second illuminance threshold value (Th2) and increases the illuminance by a third incremental amount (C3u) smaller than the third decremental amount (C3d) when increasing the illuminance in the third illuminance region (IR3).

### [Item 4]

The light distribution control apparatus (6) according to Item 2, wherein the light distribution control apparatus (6) decreases the illuminance by a third decremental amount (C3d) when decreasing the illuminance in a third illuminance region (IR3) above the second illuminance threshold value (Th2) and increases the illuminance by a third incremental amount (C3u) equal to or greater than the third decremental amount (C3d) when increasing the illuminance in the third illuminance region (IR3).

### [Item 5]

The light distribution control apparatus (6) according to Item 3 or Item 4, wherein, when a predetermined high-brightness light spot (202, 204) is detected in an area in front irradiated with a light having a predetermined maximum illuminance, the light distribution control apparatus (6) reduces the illuminance of the light irradiating the area in front to a predetermined minimum illuminance by a third decremental amount (C3d).

### [Item 6]

The light distribution control apparatus (6) according to Item 5, wherein the light distribution control apparatus (6) changes the illuminance by the first amount of change (C1) in the first illuminance region (IR1) on a condition that an illuminance change occurs after the minimum illuminance is passed and before the maximum illuminance is reached.

### [Item 7]

A vehicle lamp system (1) including:
an imaging apparatus (4) that images an area in front of a vehicle;
a variable light distribution lamp (2) adapted to radiate a variable intensity distribution visible light beam (L1) to an area in front of the vehicle; and
the light distribution control apparatus (6) according to any one of Item 1 through Item 6.

### [Item 8]

A computer program executed by a light distribution control apparatus (6) adapted to control formation of a light distribution pattern (PTN) by a variable light distribution lamp (2) by using an image (IMG) based on an imaging apparatus (4) that images an area in front of a vehicle,
wherein the computer program causes the light distribution control apparatus (6) to execute a function of changing, when changing an illuminance in a first illuminance region (IR1) equal to or below a predetermined first illuminance threshold value (Th1), the illuminance by a first amount of change (C1) smaller than an amount of change for changing the illuminance in an illuminance region (IR2, IR3) above the first illuminance threshold value (Th1).

### [Item 9]

A light distribution control method adapted to control formation of a light distribution pattern (PTN) by a variable light distribution lamp (2) by using an image (IMG) based on an imaging apparatus (4) that images an area in front of a vehicle, including:
changing, when changing an illuminance in a first illuminance region (IR1) equal to or below a predetermined first illuminance threshold value (Th1), the illuminance by a first amount of change (C1) smaller than an amount of change (C2, C3d, C3u) for changing the illuminance in an illuminance region (IR2, IR3) above the first illuminance threshold value (Th1).

### INDUSTRIAL APPLICABILITY

The present invention can be used in a light distribution control apparatus, a vehicle lamp system, and a computer program.

### REFERENCE SIGNS LIST

1 vehicle lamp system, 2 variable light distribution lamp, 4 imaging apparatus, 6 light distribution control apparatus, 8 control unit, 10 recording medium, C1 first amount of change, C2 second amount of change, C3d third decremental amount, C3u third incremental amount, IR1 first illuminance region, IR2 second illuminance region, IR3 third illuminance region, Th1 first illuminance threshold value, Th2 second illuminance threshold value

## Claims

1. A light distribution control apparatus adapted to control formation of a light distribution pattern by a variable light distribution lamp by using an image based on an imaging apparatus that images an area in front of a vehicle,
wherein, when changing an illuminance in a first illuminance region equal to or below a predetermined first illuminance threshold value, the light distribution control apparatus changes the illuminance by a first amount of change smaller than an amount of change for changing the illuminance in an illuminance region above the first illuminance threshold value.

2. The light distribution control apparatus according to claim 1,
wherein, when changing the illuminance in a second illuminance region above the first illuminance threshold value and equal to or below a second illuminance threshold value greater than the first illuminance threshold value, the light distribution control apparatus changes the illuminance by a second amount of change smaller than an amount of change for changing the illuminance in an illuminance region above the second illuminance threshold value.

3. The light distribution control apparatus according to claim 2,
wherein the light distribution control apparatus decreases the illuminance by a third decremental amount when decreasing the illuminance in a third illuminance region above the second illuminance threshold value and increases the illuminance by a third incremental amount smaller than the third decremental amount when increasing the illuminance in the third illuminance region.

4. The light distribution control apparatus according to claim 2,
wherein the light distribution control apparatus decreases the illuminance by a third decremental amount when decreasing the illuminance in a third illuminance region above the second illuminance threshold value and increases the illuminance by a third incremental amount equal to or greater than the third decremental amount when increasing the illuminance in the third illuminance region.

5. The light distribution control apparatus according to claim 3 or 4,
wherein, when a predetermined high-brightness light spot is detected in an area in front irradiated with a light having a predetermined maximum illuminance, the light distribution control apparatus reduces the illuminance of the light irradiating the area in front to a predetermined minimum illuminance by a third decremental amount.

6. The light distribution control apparatus according to claim 5,
wherein the light distribution control apparatus changes the illuminance by the first amount of change in the first illuminance region on a condition that an illuminance change occurs after the minimum illuminance is passed and before the maximum illuminance is reached.

7. A vehicle lamp system comprising:
an imaging apparatus that images an area in front of a vehicle;
a variable light distribution lamp adapted to radiate a variable intensity distribution visible light beam to an area in front of the vehicle; and
the light distribution control apparatus according to any one of claims 1 through 4.

8. A computer program executed by a light distribution control apparatus adapted to control formation of a light distribution pattern by a variable light distribution lamp by using an image based on an imaging apparatus that images an area in front of a vehicle,
wherein the computer program causes the light distribution control apparatus to execute a function of changing, when changing an illuminance in a first illuminance region equal to or below a predetermined first illuminance threshold value, the illuminance by a first amount of change smaller than an amount of change for changing the illuminance in an illuminance region above the first illuminance threshold value.
